# EUROPÄISCHE PATENTSCHRIFT

(11) **EP 2 689 227 B1**
(45) Veröffentlichungstag und Bekanntmachung des Hinweises auf die Patenterteilung: **04.04.2018**
(21) Anmeldenummer: 12716276.6
(22) Anmeldetag: 23.03.2012
(51) Int. Cl.: F16L 55/40, G01M 3/38, G01M 5/00, G01M 3/00, G01M 11/08, G03B 37/00, G03B 17/56

(54) **HEBEEINHEIT FÜR ROHRINSPEKTIONSSYSTEME**
LIFTING UNIT FOR PIPE INSPECTION SYSTEMS
UNITÉ DE LEVAGE POUR SYSTÈMES D'INSPECTION DE TUYAU

(30) Priorität: 24.03.2011 DE 102011015080
(43) Veröffentlichungstag der Anmeldung: 29.01.2014
(73) Patentinhaber: iPEK International GmbH, 87477 Sulzberg (DE)
(72) Erfinder: DÜMIG, Christian James, 87448 Waltenhofen (DE); KREUTZER, Alexander, 87527 Sonthofen (DE)
(74) Vertreter: 2s-ip Schramm Schneider Bertagnoll Patent- und Rechtsanwälte Part mbB
(86) Internationale Anmeldenummer: PCT/EP2012/055265
(87) Internationale Veröffentlichungsnummer: WO 2012/127051

(56) Entgegenhaltungen:
- WO-A1-2006/000271
- DE-A1- 10 029 764
- DE-A1-102009 050 856
- DE-U1- 9 308 552
- DE-U1-202009 010 442
- US-A- 4 773 815

## Beschreibung

Die Erfindung betrifft eine Hebeeinheit für Rohrinspektionssysteme zum Anheben einer Kopfeinheit.

Im Stand der Technik sind Rohrinspektionssysteme mit einem Fahrwagen bekannt, bei denen eine Kameraeinheit an einer Hebeeinheit befestigt ist, die in der Lage ist, die Kamera über den Fahrwagen anzuheben. Dies ist insbesondere dann erforderlich, wenn Rohre mit Kameras untersucht werden, die einen größeren Durchmesser als das Rohrinspektionssystem aufweisen, denn zur Inspektion ist es besonders vorteilhaft, wenn sich die optische Achse der Kamera etwa in der Zentrallängsachse des zu untersuchenden Rohres befindet.

Derartige Rohrinspektionssysteme haben den Nachteil, dass sie vergleichsweise groß und damit nicht für kleinere Rohre geeignet sind, vor allem aber aufwändig, teuer und vergleichsweise unflexibel sind.

Aus der DE 20 2009 010 442 U1 ist ein Inspektionssystem mit einem Fahrwagen und einer Hebeeinheit bekannt, wobei an der Hebeeinheit eine Kamera angeordnet ist. An dem hinteren Ende des Fahrwagens ist eine Anschlussbuchse vorgesehen, über die der Fahrwagen mit einem Kabelstrang verbunden wird, der zur Stromversorgung und zur Datenübertragung vorgesehen ist.

Aus der WO 2006/000271 A1 ist ein Rohrinspektionssystem bekannt, dessen konstruktiver Aufbau im Wesentlichen dem Inspektionssystem aus der DE 20 2009 101 442 U1 entspricht.

Aus der DE 93 08 552 U1 ist eine Vorrichtung zum Prüfen und Reinigen von Rohsystemen bekannt. An der Vorrichtung kann eine Videokamera angeordnet werden.

Der Erfindung liegt daher die Aufgabe zu Grunde, eine Vorrichtung zur Verfügung zu stellen, die die Vorteile des Standes der Technik bietet und die Nachteile vermeidet.

Diese Aufgabe wird mit einer Hebeeinheit für ein Rohrinspektionssystem gelöst, die einen Grundträger mit Anschlussmodul zum Anschluss an eine Anschlusseinheit eines Fahrwagens, ein Hebesystem mit mindestens einem Hebearm und einem Antrieb zum Auslenken des Hebearms gegen den Grundträger über eine Drehachse, sowie eine Kopfeinheit mit einem Anschlussmodul zum Anschluss von Inspektionseinheiten, insbesondere Kameras und Beleuchtungssystemen, aufweist, wobei Anschlüsse des Fahrwagens zumindest teilweise zum Anschlussmodul der Kopfeinheit geführt sind, wobei das Anschlussmodul der Kopfeinheit der Anschlusseinheit des Fahrwagens entspricht, und wobei die Anschlussmodule jeweils einen Stecker aufweisen.

Der Antrieb zum Auslenken des Hebearms kann einen Motor aufweisen, der sich in einem von mindestens zwei Hebearmen befindet, wobei vorteilhafterweise der Antrieb zum Auslenken des Hebearms elektrisch erfolgt und der Antrieb seine Energie über die Anschlusseinheit des Fahrwagens bezieht. Alternativ kann der Antrieb zum Auslenken des Hebearms mechanisch über eine Welle erfolgen, die über einen Anschluss am Fahrwagen angetrieben wird.

Günstig ist es, wenn der Stecker einen Schnellverschluss aufweist und wenn an der Kopfeinheit, bevorzugt im oberen Bereich, mindestens ein zusätzlicher Anschluss zur Aufnahme und Steuerung von Zusatzmodulen, bevorzugt von zusätzlichen Beleuchtungsmodulen, vorhanden ist.

Offenbart ist auch ein Fahrwagen für ein Rohrinspektionssystem, aufweisend einen Anschluss zur Aufnahme eines Steuer- und Versorgungskabels im rückwärtigen Bereich, einer Anschlusseinheit im Vorderteil, bevorzugt zur Aufnahme eines schwenkbaren Kamerakopfes, wobei der Fahrwagen Halterungen für eine Hebeeinheit nach einem der vorhergehenden Ansprüche aufweist. Vorteilhafterweise stellt dabei das Anschlussmodul Steuer- und Energieversorgungsleitungen zur Verfügung, mit denen neben dem schwenkbaren Kamerakopf auch der Antrieb und weitere mit der Hebeeinheit verbundene Module angesteuert werden können.

Ein derartiger Fahrwagen hat unter anderem den Vorteil, dass er vergleichsweise kompakt sein kann, gleichzeitig aber in Verbindung mit dem Hebeteil eine leistungsfähige, ausgesprochen vielseitig einsetzbare Rohrinspektionseinheit bildet. Für den Verwender hat dies den zusätzlichen Vorteil, dass er weniger Gesamtsysteme benötigt, da er mit dem erfindungsgemäßen System einen modularen Aufbau zur Verfügung hat, wobei er nicht alle verfügbaren Module gleichzeitig benötigt. Da an das Kopfteil des Hebesystems über einen nicht weiter gezeigten zusätzlichen Anschluss weiteres Zubehör, etwa zusätzliche Beleuchtungseinheiten oder Messvorrichtungen angebracht werden können, wird das System noch leistungsfähiger und vielseitiger.

Besonders günstig ist es, wenn der Fahrwagen zusätzlich eine Kamera und eine Beleuchtungseinrichtung im rückwärtigen Bereich des Fahrwagens aufweist, bevorzugt jeweils neben dem Anschluss für das Versorgungskabel. Dies ermöglicht eine sichere Navigation auch beim Rückwärtsfahren.

Offenbart ist schließlich ein Fahrwagen für ein Rohrinspektionssystem, aufweisend einen Anschluss zur Aufnahme eines Steuer- und Versorgungskabels im rückwärtigen Bereich, einer Anschlusseinheit im Vorderteil, bevorzugt zur Aufnahme eines schwenkbaren Kamerakopfes, der zusätzlich einen Temperaturfühler zur Messung der Umgebungstemperatur aufweist, wobei der Temperaturfühler vorzugsweise Germanium zur Detektion von Wärmestrahlung aufweist.

Offenbart ist schließlich ein Kamerakopf für Rohrinspektionssysteme mit Anschlussmodul zur Verwendung mit einer beschriebenen Hebeeinheit oder einem Fahrwagen, wobei der Kamerakopf bevorzugt in seiner Schwenk-/Drehvorrichtung ein Kreuzwellenlager aufweist, um eine besonders kompakte Bauweise zu ermöglichen.

Die Erfindung wird im Folgenden anhand eines Ausführungsbeispiels erläutert. Es zeigen
- **Fig. 1**: ein Hebesystem mit an der Kopfeinheit angebrachtem Kamerakopf,
- **Fig. 2**: ein auf einen Fahrwagen montiertes Hebesystem nach Fig. 1,
- **Fig. 3**: einen Fahrwagen zur Aufnahme eines Hebesystems nach Fig. 1,
- **Fig. 4**: die Vorderansicht eines Fahrwagens nach Fig. 3,
- **Fig. 5**: einen Schnitt durch einen Kamerakopf mit Kreuzwellenlager und
- **Fig. 6**: einen zweiten Schnitt durch einen Kamerakopf nach Fig. 5

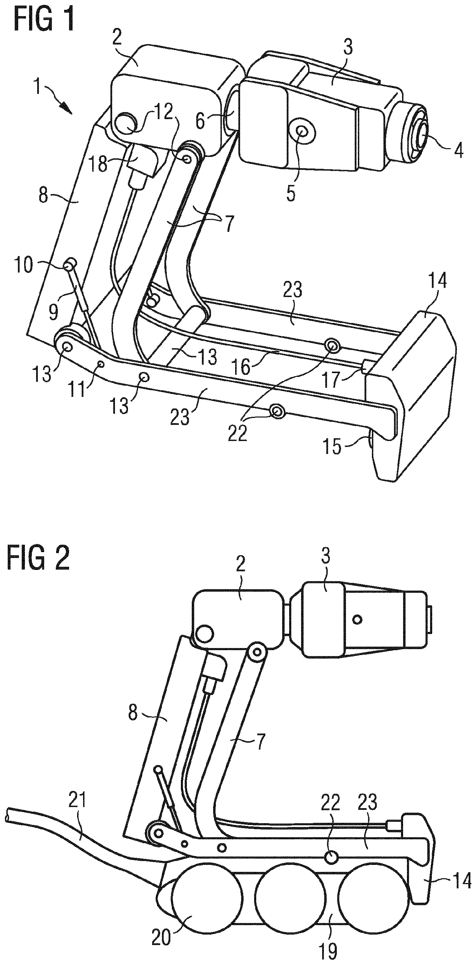

**Fig. 1** zeigt ein erfindungsgemäßes Hebesystem 1 mit einem Kopfteil 2, an welches ein Kamerakopf 3 über ein Anschlussmodul 6 mit Schnellverschluss angeschlossen ist. Der Kamerakopf weist im vorderen Teil eine Eintrittslinse 4 und eine zentrale Schwenkachse 5 auf. Die Drehachse, mit der der Kamerakopf um seine Längsachse drehbar ist und die bevorzugt ein Kreuzwellenlager aufweist, ist in Fig. 1 nicht gezeigt.

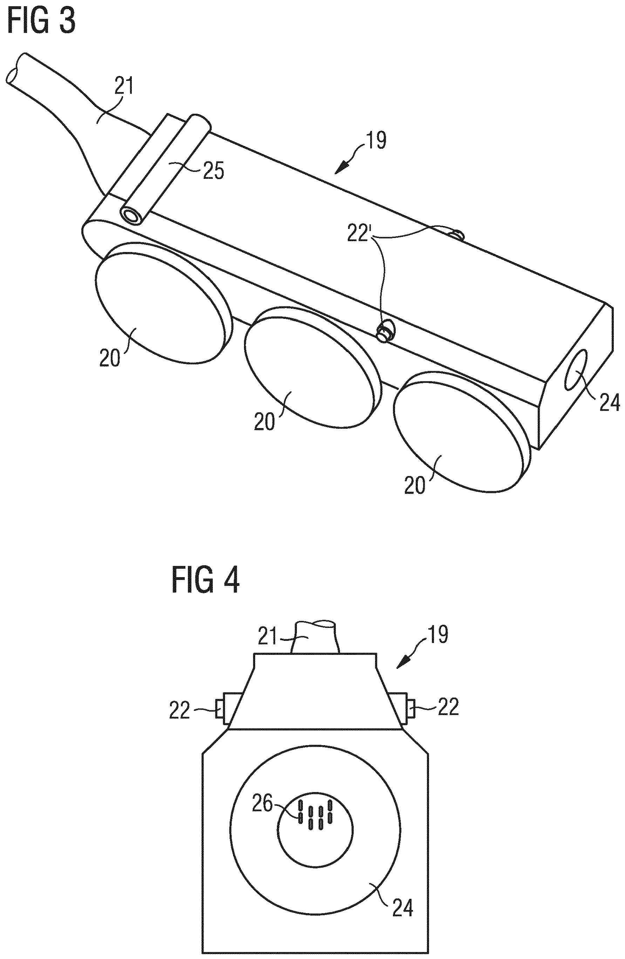

Das Kopfteil ist seitlich außen mit zwei vorderen Hebearmen 7 verbunden, die wiederum mit dem Grundträger 23 verbunden sind. Der hintere Hebearm 8 verfügt in seinem Inneren über eine elektrische Einheit, die insbesondere einen Motor aufweist, über den der Teleskoparm 9 ein und ausgefahren werden kann. Der Teleskoparm 9 ist über eine oberen Drehpunkt 10 und einen unteren Drehpunkt 11 sowohl mit dem hinteren Hebearm 8 als auch mit dem Grundträger 23 verbunden. Die Hebearme 7, 8 sind jeweils über obere Drehachsen 12 und untere Drehachsen 13 mit dem Kopfteil 2 einerseits und dem Grundträger 23 andererseits verbunden. Mit Hilfe des angetriebenen Teleskoparms 9 lässt sich das Kopfteil 2 über die Hebearme 7, 8 aus der gezeigten oberen Position nach unten vorne schwenken. In der - nicht gezeigten - unteren Endposition liegt der Kamerakopf 3 vor dem Vorderteil 14 des Grundträgers 23. Der Grundträger 23 weist vordere Befestigungspunkte 22 auf, die zu entsprechenden Halterungen 22', die etwa in Fig. 4 gezeigt sind, korrespondieren.

Die Montage des Antriebs für die Hebeeinheit in die Hebeeinheit spart Platz im Fahrwagen und ermöglicht es, diesen besonders kompakt zu konstruieren. Soweit etwas mehr Platz im Fahrwagen zur Verfügung steht ist es aber alternativ möglich, im Fahrwagen eine Welle anzutreiben, die nach außen geführt wird und das Hebesystem unmittelbar antreibt. Bei dieser Variante kann das Hebesystem schlanker und leichter ausfallen.

Am Vorderteil 14 des Grundträgers 23 ist ein Anschlussmodul 15, hier ein Stecker vorhanden, der in eine korrespondierende Anschlusseinheit 24 eines Fahrwagens 19 passt. **Fig. 4** zeigt einen Fahrwagen 19 in der Frontansicht mit Anschlusseinheit 24, welche als Buchse ausgebildet ist, in deren Inneren sich Steckkontakte 26 befinden.

Die in Fig. 1 gezeigte Hebeeinheit 1 weist weiterhin ein Kabel 16 auf, welches über einen Stecker 17 mit dem Vorderteil 14 des Grundträgers 23 und über einen Stecker 18 mit dem die elektrische Steuereinheit enthaltenden hinteren Hebearm 8 verbunden ist. Über das Kabel 16 werden die elektrischen Steuer- und Versorgungsanschlüsse der Anschlusseinheit 24 des Fahrwagens 19 über den Stecker in die elektrische Steuereinheit geführt und von dort zumindest teilweise in den Kopfteil 2 weitergeleitet, so dass das Anschlussmodul 6 im Kopfteil 2 idealerweise über die selben durchgeleiteten Anschlüsse wie die Anschlusseinheit 24 des Fahrwagens 19 verfügt, so dass der Kamerakopf 3 samt möglicher Zusatzmodule an der Hebeeinheit 1 genauso angesprochen und bedient werden kann wie am Fahrwagen 19.

**Fig. 2** zeigt die Hebeeinheit der Fig. 1 mit Hebearmen 7,8, Kopfteil 2, Kamerakopf 3 und Grundträger 23 über eine vordere Befestigung 22 an einem Fahrwagen 19 montiert. Das vordere Anschlussmodul der Hebeeinheit ist dabei - hier nicht gezeigt - über das Vorderteil 14 mit der Anschlusseinheit des Fahrwagens 19 verbunden. Der Fahrwagen 19 bezieht seine Energie und Steuerbefehle über ein Kabel 21 im hinteren Bereich des Fahrwagens 19. Der Motor des Fahrwagens 19 treibt in bekannter Weise die Räder 20 an.

**Fig. 3** zeigt den Fahrwagen 19 ohne Hebeeinheit und Kamerakopf. Zu erkennen ist das Steuer- und Versorgungskabel 21, die Räder 20 und die vordere Anschlusseinheit 24. Darüber hinaus sind die vorderen Befestigungen 22' für die Aufnahme und Halterung des Grundträgers 23 gezeigt. Der Grundträger 23 kann zusätzlich über eine hintere Befestigung 25, hier als Nut ausgebildet gehaltert werden.

In einer weiteren Ausführungsform sind die Räder 20 leicht abnehmbar, so dass über deren Achsen eine Lafette, aufweisend ein Gestell mit unten liegenden Rädern, die mechanisch über die oben angekoppelten Achsen des Fahrwagens 19 angetrieben werden, angekoppelt werden kann. Damit kann der Fahrwagen insgesamt angehoben werden, was bei bekanntem Rohrdurchmesser entweder den Einsatz der Hebeeinheit vermeidbar macht oder in Verbindung mit der Hebeeinheit noch größere Rohrdurchmesser inspizierbar werden lässt. In praktischen Versuchen hat sich mit dem erfindungsgemäßen System die Möglichkeit ergeben, Rohre mit Innendurchmessern zwischen 150 und 1.000 mm zu inspizieren. Im Stand der Technik war für einen derartigen Einsatzbereich eine Vielzahl von Einzelsystemen erforderlich.

Ebenfalls nicht gezeigt ist eine Ausführungsform, bei der der Fahrwagen 19 einen Temperatursensor aufweist. Der Temperatursensor ist vorzugsweise aus Germanium und daher besonders geeignet, Temperaturstrahlung zu messen. Es versteht sich, dass der Temperatursensor auch an der Hebeeinheit oder dem Kamerakopf angebracht sein kann.

Die Messung von Umgebungstemperaturen ist etwa im Inneren von Deponien interessant, aber auch in allen anderen Umgebungen, in denen mit bei gewissen Temperaturen entzündlichen Gasen zu rechnen ist. Ein Sensor aus Germanium lässt sich besonders gut dicht in explosionsgeschützte Einheiten einfügen, ohne dass mit Funkenbildung zu rechnen ist. Darüber hinaus kann mit einem solchen Sensor zuverlässig im interessierenden Temperaturbereich gemessen werden.

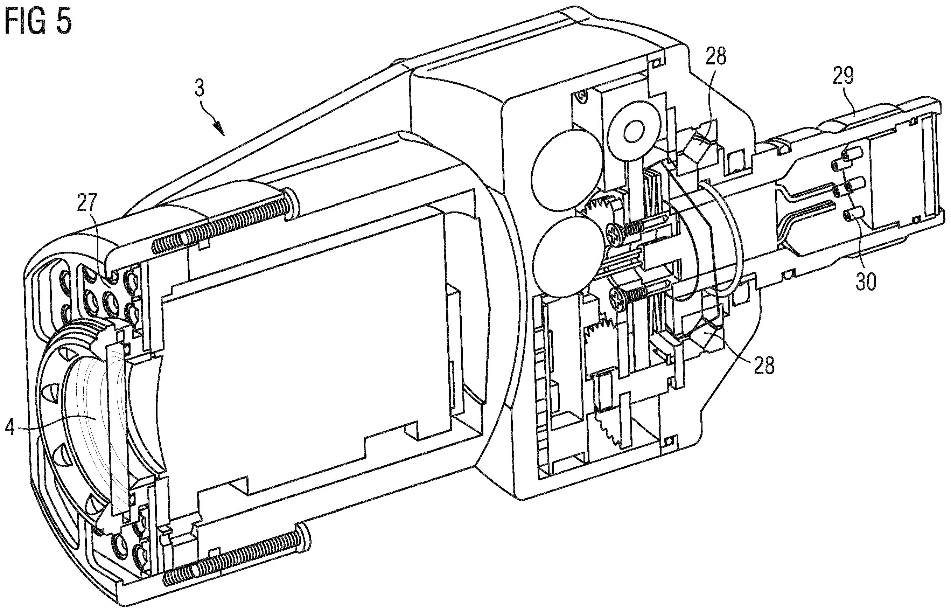

**Fig. 5** zeigt einen perspektivischen Schnitt durch einen Kamerakopf 3 mit Eintrittslinse 4 im vorderen und Anschlussmodul 29 im hinteren Bereich. Im Anschlussmodul 29 sind exemplarisch Kontakte 30 gezeigt, die zu den in Fig. 4 gezeigten Steckkontakten 26 in der Anschlusseinheit 24 des Fahrwagens 19 korrespondieren.

Der Kamerakopf 3 ist um seine Längsachse drehbar gelagert. Die Erfinder haben hier erstmals erkannt, dass es möglich ist, in einem Kamerakopf für Rohrinspektionssysteme ein Kreuzrollenlager 28 zu verwenden. Ein derartiges Kreuzrollenlager 28 ermöglicht eine ausgesprochen kompakte Bauweise des Kamerakopfes 3.

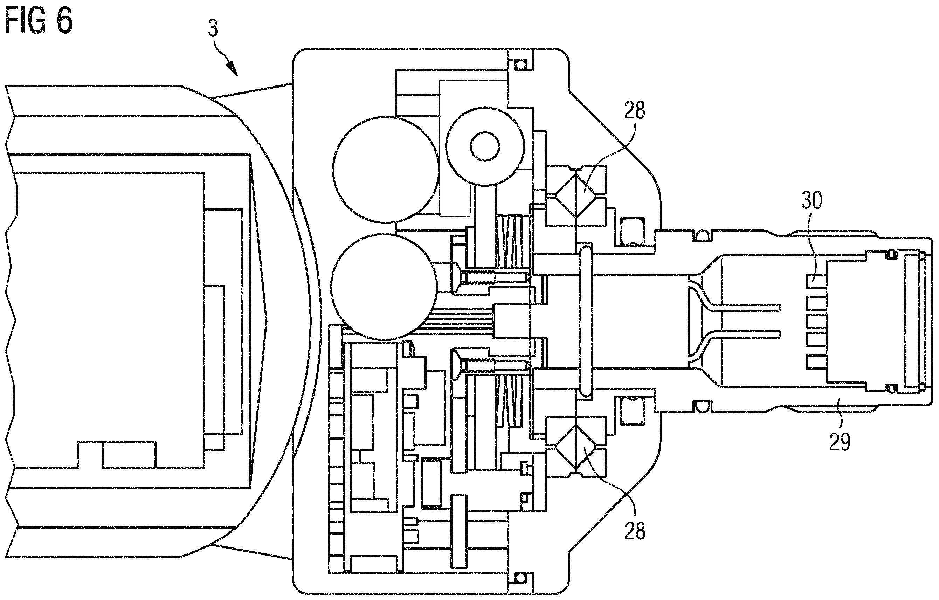

**Fig. 6** zeigt den hinteren Teil des Kamerakopf s 3 aus Fig. 5 im Längsschnitt. Zu erkennen ist insbesondere die Position des Kreuzrollenlagers 28, aber auch das Anschlussmodul 29 und die Steckkontakte 30.

### Bezugszeichenliste

- 1: Hebeeinheit
- 2: Kopfteil
- 3: Kamerakopf
- 4: Eintrittslinse
- 5: Schwenkachse Kamerakopf
- 6: Anschluss Kamerakopf - Kopfteil
- 7: Vordere Hebearme
- 8: Hinterer Hebearm mit elektrischer Steuer- und Antriebseinheit
- 9: Teleskoparm
- 10: Obere Teleskoparmachse
- 11: Untere Teleskoparmachse
- 12: Obere Hebearmachsen
- 13: Untere Hebearmachsen
- 14: Vorderteil des Grundträgers
- 15: Anschlussmodul zum Anschluss an den Fahrwagen
- 16: Kabel
- 17: Stecker zum Vorderteil
- 18: Stecker zum Kopfteil
- 19: Fahrwagen
- 20: Räder
- 21: Steuer- und Versorgungskabel
- 22: Vordere Befestigung des Grundträgers (22, 22')
- 23: Grundträger
- 24: Anschlusseinheit Fahrwagen
- 25: Hintere Befestigung Grundträger
- 26: Steckkontakte
- 27: Beleuchtung am Kamerakopf
- 28: Kreuzwellenlager
- 29: Anschlussmodul Kamerakopf
- 30: Buchsen für elektrische Steckkontakte

## Patentansprüche

1. Fahrwagen (19) für Rohrinspektionssysteme mit einer Hebeeinheit (1) zum Anheben einer Kopfeinheit, wobei die Hebeeinheit (1) aufweist:
- einen Grundträger (23),
- ein Hebesystem mit mindestens einem Hebearm (7; 8) und einem Antrieb zum Auslenken des Hebearms gegen den Grundträger (23) über eine Drehachse,
- sowie eine Kopfeinheit (2) mit einem Anschlussmodul (6) zum Anschluss von Inspektionseinheiten (3), insbesondere Kameras und Beleuchtungssystemen,
**dadurch gekennzeichnet, dass** der Fahrwagen (19) im Vorderteil eine Anschlusseinheit (24) aufweist, und dass der Grundträger (23) an einem Vorderteil (14) des Grundträgers ein Anschlussmodul (15) zum Anschluss der Hebeeinheit (1) an die Anschlusseinheit (24) im Vorderteil des Fahrwagens (19) aufweist, wobei
das Anschlussmodul (15) des Grundträgers (23) in die Anschlusseinheit (24) des Fahrwagens (19) passt,
wobei Anschlüsse (26) der Anschlusseinheit (24) des Fahrwagens (19) zumindest teilweise zum Anschlussmodul (6) der Kopfeinheit (2) geführt sind, wobei das Anschlussmodul (6) der Kopfeinheit (2) der Anschlusseinheit (24) des Fahrwagens (19) entspricht,
wobei das Anschlussmodul (6) der Kopfeinheit (2) über dieselben Anschlüsse wie die Anschlusseinheit (24) des Fahrwagens (19) verfügt,
und wobei die Anschlussmodule (6; 15) jeweils einen Stecker aufweisen.

2. Fahrwagen nach dem vorhergehenden Anspruch, wobei der Antrieb zum Auslenken des Hebearms (7; 8) einen Motor aufweist, der sich in einem von mindestens zwei Hebearmen befindet.

3. Fahrwagen nach einem der vorhergehenden Ansprüche, wobei der Antrieb zum Auslenken des Hebearms elektrisch erfolgt und der Antrieb seine Energie über die Anschlusseinheit (24) des Fahrwagens (19) bezieht.

4. Fahrwagen nach einem der vorhergehenden Ansprüche 1 bis 2, wobei der Antrieb zum Auslenken des Hebearms (7; 8) mechanisch über eine Welle erfolgt, die über einen Anschluss am Fahrwagen (19) angetrieben wird.

5. Fahrwagen nach einem der vorhergehenden Ansprüche, wobei die Stecker einen Schnellverschluss, aufweisen.

6. Fahrwagen nach einem der vorhergehenden Ansprüche, wobei die Hebeeinheit an der Kopfeinheit (2), bevorzugt im oberen Bereich, mindestens einen zusätzlichen Anschluss zur Aufnahme und Steuerung von Zusatzmodulen, bevorzugt von zusätzlichen Beleuchtungsmodulen, aufweist.

7. Fahrwagen nach einem der vorhergehenden Ansprüche, aufweisend einen Anschluss zur Aufnahme eines Steuer- und Versorgungskabels (21) im rückwärtigen Bereich, wobei der Fahrwagen Halterungen (22; 25) für die Hebeeinheit (1) aufweist.

8. Fahrwagen nach einem der vorherigen Ansprüche, zusätzlich aufweisend eine Kamera und eine Beleuchtungseinrichtung im rückwärtigen Bereich des Fahrwagens, bevorzugt jeweils neben dem Anschluss für das Versorgungskabel.

9. Fahrwagen nach einem der vorherigen Ansprüche, zusätzlich aufweisend einen Temperaturfühler zur Messung der Umgebungstemperatur.

10. Fahrwagen nach dem vorherigen Anspruch, wobei der Temperaturfühler Germanium zur Detektion von Wärmestrahlung aufweist.

## Claims

1. A crawler (19) for a tubing inspection system having a lifting unit (1) for lifting a head unit, said lifting unit (1) comprising:
- a base support (23),
- a lifting system having at least one lifting arm (7; 8) and a drive mechanism for deflecting said lifting arm with respect to the base support (23) via an axis of rotation,
- and a head unit (2) having a connection module (6) for connecting inspection units (3), in particular cameras and lighting systems,
**characterised in that** the crawler (19) has a connection unit (24) provided in the front part thereof and **in that** the base support (23) has a connection module (15) provided in the front part (14) of said base support for connecting the lifting unit (1) to the connection unit (24) provided in the front part of the crawler (19),
with the connection module (15) of the base support (23) fitting into the connection unit (24) of the crawler (19),
with the connections (26) of the connection unit (24) of the crawler (19) being routed at least partially to the connection module (6) of the head unit (2), said connection module (6) corresponding to the head unit (2) of the connection unit (24) of the crawler (19),
with said connection module (6) of the head unit (2) having the same connections as the connection unit (24) of the crawler (19), and with each of said connection modules (6; 15) having one connector.

2. The crawler as claimed in the preceding claim, wherein the drive mechanism for deflecting the lifting arm (7; 8) has a motor accommodated in one of at least two lifting arms.

3. The crawler as claimed in any of the preceding claims, wherein the drive mechanism for deflecting the lifting arm is electrically operated and the drive mechanism draws its energy from the connection unit (24) of the crawler (19).

4. The crawler as claimed in any of the preceding claims 1 to 2, wherein the drive mechanism for deflecting the lifting arm (7; 8) is mechanically operated via a shaft which is powered via a connection provided on the crawler (19).

5. The crawler as claimed in any of the preceding claims, wherein said connectors have a quick-release fastener.

6. The crawler as claimed in any of the preceding claims, wherein on the head unit (2), preferably in the upper portion thereof, the lifting unit has at least one additional connection for receiving and controlling accessory modules, preferably additional lighting modules.

7. The crawler as claimed in any of the preceding claims, having a connection provided on its rear portion for receiving a control and power cable (21), said crawler having mounting supports (22; 25) for the lifting unit (1).

8. The crawler as claimed in any of the preceding claims, having, in addition, a camera and a lighting device provided on the rear portion of said crawler, preferably next to the connection for the power cable.

9. The crawler as claimed in any of the preceding claims, having, in addition, a temperature sensor for measuring the ambient temperature.

10. The crawler as claimed in the preceding claim, wherein the temperature sensor uses germanium for detecting thermal radiation.

## Revendications

1. Chariot (19) pour systèmes d'inspection de canalisation avec une unité élévatrice (1) destinée à soulever une unité de tête, ladite unité élévatrice (1) présentant :
- un support de base (23),
- un système de levage avec au moins un bras de levage (7; 8) et un mécanisme d'entraînement destiné à dévier, via un axe de rotation, ledit bras de levage par rapport au support de base (23),
- ainsi qu'une unité de tête (2) avec un module de raccordement (6) permettant le raccordement d'unités d'inspection (3), en particulier de caméras et de systèmes d'éclairage,
**caractérisé en ce que** ledit chariot (19) présente, dans la partie avant, une unité de raccordement (24) et **en ce que** le support de base (23) présente, sur une partie avant (14) du support de base, un module de raccordement (15) permettant de raccorder l'unité de levage (1) à l'unité de raccordement (24) prévue dans la partie avant du chariot (19),
le module de raccordement (15) du support de base (23) étant conçu pour entrer dans l'unité de raccordement (24) du chariot (19),
des raccordements (26) de l'unité de raccordement (24) du chariot (19) menant au moins partiellement jusqu'au module de raccordement (6) de l'unité de tête (2), ledit module de raccordement (6) de l'unité de tête (2) correspondant à l'unité de raccordement (24) du chariot (19),
le module de raccordement (6) de l'unité de tête (2) disposant des mêmes raccordements que l'unité de raccordement (24) du chariot (19), et les modules de raccordement (6; 15) présentant respectivement une fiche.

2. Chariot selon la revendication précédente, dans lequel le mécanisme d'entraînement destiné à dévier le bras de levage (7; 8) présente un moteur qui se trouve dans l'un des bras de levage qui sont au moins au nombre de deux.

3. Chariot selon l'une quelconque des revendications précédentes, dans lequel l'entraînement destiné à dévier le bras de levage s'effectue de manière électrique et le mécanisme d'entraînement reçoit son énergie par l'intermédiaire de l'unité de raccordement (24) du chariot (19).

4. Chariot selon l'une quelconque des revendications 1 à 2, dans lequel l'entraînement destiné à dévier le bras de levage (7; 8) s'effectue de manière mécanique par l'intermédiaire d'un arbre qui est entraîné par un raccordement (19) prévu sur le chariot (19).

5. Chariot selon l'une quelconque des revendications précédentes, dans lequel les fiches présentent un dispositif de fermeture rapide.

6. Chariot selon l'une quelconque des revendications précédentes, dans lequel au niveau de l'unité de tête (2), de préférence dans la zone supérieure, l'unité de levage présente au moins un raccordement supplémentaire en vue de recevoir et de commander des modules supplémentaires, de préférence des modules d'éclairage supplémentaires.

7. Chariot selon l'une quelconque des revendications précédentes lequel présente, dans la zone arrière, un raccordement destiné à recevoir un câble de commande et d'alimentation (21), ledit chariot présentant des supports (22; 25) pour l'unité de levage (1).

8. Chariot selon l'une quelconque des revendications précédentes présentant en outre une caméra et un dispositif d'éclairage dans la zone arrière dudit chariot, lesquels sont de préférence respectivement situés à côté du raccordement prévu pour le câble d'alimentation.

9. Chariot selon l'une quelconque des revendications précédentes présentant en outre un capteur de température en vue de mesurer la température ambiante.

10. Chariot selon la revendication précédente, dans lequel le capteur de température présente du germanium en vue de détecter un rayonnement thermique.
